# EUROPEAN PATENT SPECIFICATION

(11) **EP 1 648 959 B1**
(45) Date of publication and mention of the grant of the patent: **24.11.2010**
(21) Application number: 04779402.9
(22) Date of filing: 28.07.2004
(51) Int. Cl.: C08K 3/00, C08K 5/00, C08L 23/10, C08L 23/16, C08L 25/08, C08L 9/06

(54) **NUCLEATED THERMOPLASTIC ELASTOMER COMPOSITIONS AND RELATED METHODS**
NUKLEIERTES THERMOPLASTISCHES ELASTOMER ENTHALTENDE ZUSAMMENSETZUNG UND ZUGEHÖRIGE VERFAHREN
COMPOSITIONS ELASTOMERES THERMOPLASTIQUES NUCLEEES ET PROCEDES ASSOCIES

(30) Priority: 30.07.2003 US 491147 P
(43) Date of publication of application: 26.04.2006
(73) Proprietor: PolyOne Corporation, Avon Lake, OH 44012 (US)
(72) Inventor: ADUR, Ashok, M., Westlake, OH 44145 (US)
(74) Representative: Winter, Brandl, Fürniss, Hübner, Röss, Kaiser, Polte - Partnerschaft
(86) International application number: PCT/US2004/024336
(87) International publication number: WO 2005/012410

(56) References cited:
- EP-A- 0 651 009
- EP-A1- 1 621 571
- EP-A1- 1 621 571
- US-A- 5 717 020
- PATENT ABSTRACTS OF JAPAN vol. 004, no. 113 (C-021), 13 August 1980 (1980-08-13) & JP 55 071736 A (IDEMITSU PETROCHEM CO LTD), 30 May 1980 (1980-05-30)
- PATENT ABSTRACTS OF JAPAN vol. 1996, no. 10, 31 October 1996 (1996-10-31) & JP 08 157659 A (SUMITOMO BAKELITE CO LTD), 18 June 1996 (1996-06-18)
- PATENT ABSTRACTS OF JAPAN vol. 2000, no. 07, 29 September 2000 (2000-09-29) & JP 2000 095902 A (SEKISUI CHEM CO LTD), 4 April 2000 (2000-04-04)
- DATABASE WPI Section Ch, Week 199332 Derwent Publications Ltd., London, GB; Class A17, AN 1993-252858 XP002301703 & JP 05 170939 A (KYOWA LEATHER CLOTH CO LTD) 9 July 1993 (1993-07-09)
- DATABASE WPI Section Ch, Week 200268 Derwent Publications Ltd., London, GB; Class A18, AN 2002-633348 XP002301704 & KR 2002 013 004 A (E-SANG CO LTD) 20 February 2002 (2002-02-20)
- SHANKS R A ET AL: "Polypropylene-polyethylene blend morphology controlled by time-temperature-miscibility" POLYMER, ELSEVIER SCIENCE PUBLISHERS B.V, GB LNKD- DOI:10.1016/S0032-3861(99)00399-7, vol. 41, no. 6, 1 March 2000 (2000-03-01), pages 2133-2139, XP004244209 ISSN: 0032-3861
- PRZYBYTNIAK ET AL: "Radiation degradation of blends polypropylene/poly(ethylene-co-vinyl acetate)" RADIATION PHYSICS AND CHEMISTRY, ELSEVIER SCIENCE PUBLISHERS BV., AMSTERDAM, NL LNKD- DOI:10.1016/J.RADPHYSCHEM.2007.02.022, vol. 76, no. 8-9, 24 May 2007 (2007-05-24) , pages 1312-1317, XP022094641 ISSN: 0969-806X
- SHANKS R.A.; LI J.; YU L.: 'Polypropylene-polyethylene blend morphology controlled by time-temperature-miscibility' POLYMER vol. 41, no. 6, March 2000, pages 2133 - 2139, XP004244209
- PRZYBYTNIAK G. ET AL: 'Radiation degradation of blends polypropylene/poly(ethylene-co-vinyl acetate)' RADIATION PHYSICS AND CHEMISTRY vol. 76, no. 8-9, 24 May 2007, AMSTERDAM, NL, pages 1312 - 1317, XP022094641

## Description

### Field of the Invention

This invention relates to use of nucleating agents in propylene-based thermoplastic elastomers.

### Background of the Invention

In the past several decades, the use of polymers has transformed the world. Polymer science has rapidly evolved to make thousands of different thermoplastic and thermosetting products within the four corners of polymer physics: thermoplastic plastics, thermoplastic elastomers, thermoset plastics, and thermoset elastomers. Of these four, a thermoplastic elastomer (also "TPE") exhibits both the valuable performance properties of an elastomer and the valuable processing properties of a thermoplastic.

Thermoplastic elastomers are generally identified and categorized, as reported in Thermoplastic Elastomers, edited by Holden et al. (1996), based on the type of elastomer. A "thermoplastic elastomer" (TPE) is generally a polymer or blend of polymers that can be processed and recycled in the same way as a conventional thermoplastic material, yet having properties and performance similar to that of an elastomer or rubber at the service temperature at which it is used. Notably, blends (or alloys) of plastic and elastomeric rubber have become increasingly important in the production of thermoplastic elastomers, particularly for the replacement of thermoset rubber or flexible polyvinyl chloride (PVC) in various applications.

A "thermoplastic vulcanizate" (TPV) is a type of thermoplastic elastomer, where the elastomer phase is partially or completely crosslinked, vulcanized or cured, such that the TPV can be processed and recycled in the same way as a conventional thermoplastic material, yet retaining properties and performance similar to that of a vulcanized elastomer or rubber at the service temperature at which it is used. TPVs are becoming increasingly important in the production of high performance thermoplastic elastomers, particularly for the replacement of thermoset rubber in various applications.

No large scale production of any polymer can rest on current processing conditions. Reduction of cost, improvement of productivity, delivery of better performing, lower cost products all drive the polymer science industry. The situation is no different for TPEs.

### Summary of the Invention

The art needs a means to enhance initiation and propagation of crystal growth in thermoplastic elastomers (TPEs), as a means to reduce production time and effort and increase productivity. The art also needs a means to improve the transparency of a TPE, while at the same time enabling efficient processing of compositions comprising TPEs.

The present invention solves the problem in the art by introducing into TPEs the facility of a nucleating agent to increase the number of nucleation sites in the thermoplastic phases of TPEs from which crystal growth propagates. By increasing the number of crystals formed within the thermoplastic phase of a TPE, the crystal structure of the TPE composition becomes solid more quickly upon cooling.

During processing of TPE articles, it is advantageous economically to get the TPE to solidify as quickly as possible without warping the article being formed. For example, when injection molding parts from the TPE, once a crystal structure is formed within the thermoplastic phase of a TPE, the article can be removed from the mold. This enables more parts to be produced per hour - reducing the cycle time, and hence increasing the production rate and reducing the processing cost.

Not only has the introduction of nucleating agents into TPEs been discovered to increase productivity of TPE compositions and articles therefrom, but it also promotes formation of transparent TPE compositions, especially when the TPE is used to form relatively thin articles. In certain embodiments of the invention, as more nucleation sites from which crystal growth propagates are introduced, the resulting crystal size in the processed article tends to be smaller than without the introduction of those nucleation sites. This phenomenon facilitates transparency in the article depending on how it is otherwise processed (e.g., if the article is processed to a relatively low thickness).

The TPE composition used in the invention is a combination of traditional TPEs with one or more nucleating agents. Unexpectedly, while nucleating agents have been known for use with non-self-nucleating polymeric resins, such as polypropylene, no one has seen fit to include such nucleating agents in the thermoplastic portion of a TPE as afforded by the present invention.

Unexpectedly, one can reduce production cycle times by as much as at least 25 percent (%) because the rate of initiation and propagation of crystal growth in the thermoplastic phase of a melt-processed thermoplastic elastomer compound of the present invention is increased by a like percentage. The producer of the final part or article from this melt-processed TPE composition can, therefore, increase the rate of cooling and completion of subsequent processing steps without complication by the effects of crystal growth after cooling of the material below the melting or softening temperature of the thermoplastic phase.

While these efficiencies are beneficial in processing TPE compositions for a variety of applications, the efficiencies are particularly noteworthy when forming the TPE compositions into final articles using injection molding, a processing technique that heats the TPE composition to a temperature higher than the melting or softening temperature of the thermoplastic phase.

A production rate limiting step in these types of processes is often the cooling step, whereby the processed material is transformed from the liquid or molten state to the solid state. Because of the reduced time it now takes to crystallize and hence solidify the thermoplastic phase of TPE compositions according to the present invention, the material is able to cool more quickly. Advantageously, this increases the overall production efficiency.

Further, TPE compositions used in the invention are prone less to the well-known phenomenon of super cooling. By minimizing super cooling within the TPE compositions, articles formed by the TPE compositions are able to advance through, for example, the quality control step of production more rapidly as the article's crystal structure and resulting properties stabilize much sooner than articles formed from conventional TPEs (i.e., without a nucleating agent). In preferred embodiments of the invention, quality control is able to be reliably performed within no more than 2 hours, and even within minutes of an article's formation. In contrast, articles processed using conventional TPEs can take up to about 24 or even 72 hours to stabilize to the point where quality control analysis thereof can be reliably performed and the article can be used for its intended application.

The improvements in the art of TPE melt-processing apply to both the manufacturer of the TPE composition and to the customer of that TPE composition. More importantly, that customer who re-melt-processes the TPE composition can benefit directly from manufacturing efficiencies introduced by way of the compositions of the present invention. The benefits seen by the end user are possible without the need for that user to introduce additional processing equipment or steps into what may already be a timely and complicated process.

The introduction of the nucleating agent into the TPE compositions is not complicated and can utilize one of several methods: (1) addition as a post-processing step after the TPE itself is formed but before the TPE is transferred to another melt-processor (e.g., the end user who will transform the TPE composition into a desired article), or (2) addition during final processing of the TPE into a part or article. In that respect, the first method choice is similar to what the last melt-processor could do itself as in the second method, but for the fact that if the nucleating agent is introduced at that stage, it typically does not get distributed evenly without a melt mixing or compounding step and further, the last melt-processor typically has a desire to streamline its own manufacturing steps.

### Embodiments of the Invention

Thermoplastic elastomer (TPE) compositions of the invention comprise at least one TPE and at least one nucleating agent. The compositions comprise both of these components, before and after melt-processing, as the nucleating agent typically does not chemically react with the TPE nor degrade during processing.

Nucleating agents of the invention are useful for preparing unique TPE compositions comprising at least one elastomer phase and at least one thermoplastic phase. In further embodiments of the invention, the TPE compositions comprise at least two chemically distinct thermoplastic phases. In still further embodiments, the TPE compositions comprise at least two chemically distinct elastomer phases. In yet further embodiments, the TPE compositions also comprise optional processing oils, other additives, or combinations thereof, as well known to those skilled in the art.

### Thermoplastic Elastomer (TPE)

A wide variety of TPEs can be used beneficially with nucleating agents of the invention. Within a TPE, there is at least one phase of a thermoplastic polymer and at least one phase of an elastomer, one of which is a continuous "matrix" phase in which the other phase is dispersed. According to the invention, the thermoplastic polymer functions as the continuous matrix phase with at least one discontinuous elastomer phase dispersed therein. As understood by those of ordinary skill in the art, which phase is the continuous phase depends upon the ratio of the thermoplastic to the elastomer phase as well as the viscosity ratios of the materials comprising the two phases. The ratio of thermoplastic to elastomer components in the TPE varies depending on the intended application. The selection of the types and amounts of these components is understood by those of ordinary skill in the art.

Preferably the thermoplastic and elastomer components of the TPE are selected such that they are generally compatible. "Generally compatible" means that the one phase (i.e., the elastomer phase of the TPE) has a good adhesion to and is finely dispersed in a continuous phase of the other component (i.e., the thermoplastic phase of the TPE). While not meant to limit the scope of the invention, the average elastomer particle size in generally compatible systems can range from as small as physically possible to about 100 µm in diameter. Desirably, the particle size of the elastomer particles can range from about 0.1 µm to about 5 µm in diameter, and preferably from about 0.05 µm to about 2 µm in diameter in particularly preferred compatible TPE systems.

Thermoplastics are generally materials that can be molded or otherwise shaped and reprocessed at temperatures at least as great as their softening or melting point. Polyolefins are preferred thermoplastic materials. As such, one particularly preferred TPE is a thermoplastic olefin elastomer (TPOE). TPOEs comprise at least one thermoplastic polyolefin and at least one elastomer.

Polyolefins are a fundamental building block in polymer science and engineering because of their low cost, high volume production based on petrochemical production. Polyolefins useful as thermoplastic olefins of the invention are homopolymers and copolymers of propylene. Most preferred is the homopolymer of propylene, polypropylene.

Beneficial effects of the invention are readily observed when incorporating nucleating agents into TPEs comprising a propylene-based thermoplastic phase. Propylene-based materials, such as polypropylene, do not "self-nucleate." That is, an external stimulus is required in order to provide nucleation sites for crystal growth propagation. Thus, there is a strong need to prevent the super cooling phenomenon witnessed more frequently with materials that do not self-nucleate in order to promote rapid solidification of the crystallized structure therein to increase processing efficiency.

Polypropylene (PP) has thermoplastic properties best explained by a recitation of the following mechanical and physical properties: a rigid semicrystalline polymer with a modulus of about 1 GPa, a yield stress of about 35 MPa, and an elongation to ranging from about 10% to about 1,000 %. Selection of a polyolefin from commercial producers uses Melt Flow Index or Melt Flow Rate (MFI or MFR) properties. The MFI can range from about 0.05 to about 1400, and preferably from about 0.5 to about 70 g/10 min at 230°C under a 2.16 kg load. For polypropylene, that MFI should be from about 0.5 to about 70 and preferably from about 1 to about 35 g/10 min at 230°C under a 2.16 kg load. Non-limiting examples of polypropylene useful for the present invention are those commercially available from multinational suppliers such as Dow Chemicals, Basell Polyolefins, and BP Amoco, Huntsman, etc.

The elastomers which form the elastomer phase of TPEs of the invention have a substantially saturated hydrocarbon backbone chain that causes the copolymer to be relatively inert to ozone attack and oxidative degradation, but have side-chain unsaturation available for curing. According to the invention, the elastomer phase comprises styrenic copolymer elastomers (i.e., those elastomers derived from styrene and at least one other monomer, elastomers that include styrene-butadiene (SB) rubber, styrene-ethylene-butadiene-styrene (SEBS) rubber, styrene-ethylene-propylene-styrene (SEPS) rubber, styrene-isoprene-styrene (SIS) rubber, styrene-ethylene-ethylene-propylene-styrene (SEEPS) rubber, styrene propylene-styrene (SPS) rubber, and others, all of which may optionally be hydrogenated) or ethylene-propylene-diene rubber (EPDM), where the EPDM may be crosslinked partially or fully.

EPDM is preferred because it is a fundamental building block in polymer science and engineering due to its low cost and high volume, as it is a commodity synthetic rubber since it is based on petrochemical production. EPDM encompasses copolymers of ethylene, propylene, and at least one nonconjugated diene. Most preferably, when EPDM comprises the elastomer phase of a TPE, the EPDM is crosslinked such that the TPE is a thermoplastic vulcanizate (TPV). The benefits of using EPDM are best explained by the following mechanical and physical properties: low compression set, the ability to be oil extended to a broad range of hardness, and good thermal stability.

Selection of an olefinic elastomer from commercial producers uses Mooney Viscosity properties. The Mooney Viscosity for olefinic elastomer can range from about 1 to about 1,000, and preferably from about 20 to about 150 ML 1 + 4 @ 100°C. For EPDM, that Mooney Viscosity should be from about 1 to about 200, and preferably from about 20 to 70 ML 1 + 4 @ 100°C, when the elastomer is extended with oil. Non-limiting examples of EPDM useful for the present invention are those commercially available from multinational companies such as Bayer Polymers, DuPont Dow Elastomers, Uniroyal Chemicals (now part of Crompton Corp.), ExxonMobil Chemicals, and others.

The elastomer itself may be provided in a variety of forms. For example, elastomers are available in liquid, powder, bale, shredded, or pelleted form. The form in which the elastomer is supplied influences the type of processing equipment and parameters needed to form the TPE. Those of ordinary skill in the art are readily familiar with processing elastomers in these various forms and will make the appropriate selections to arrive at the TPE component of the invention.

As noted above and unless proscribed otherwise by the appended claims, formation of TPE compositions comprising at least one nucleating agent are not necessarily limited to those based on any particular TPE and a wide variety of TPEs are commercially available. For example, PolyOne Corporation, Bayer, Crompton Corporation, DuPont Dow Elastomers, Teknor Apex, AES, Multibase, SoFTeR, Sumitomo, Asahi Kasei, Kraton, GLS, ExxonMobil Corporation, Uniroyal Chemical, and many other multinational companies have supplied commercial TPEs to the marketplace under an assortment of trade designations. These companies and many others provide a wide variety of TPEs that can be used in accordance with the present invention.

### Nucleating Agent

A "nucleating agent" of the present invention is an additive that forms nuclei in a polymer melt, which nuclei initiate and promote crystal growth in at least one thermoplastic phase of the TPE. That is, the nucleating agent provides a nucleated TPE. It should be noted that the term "nucleating agent" is sometimes conventionally used in reference to a foaming process. It should be understood that those nucleating agents, to the extent that they are incapable of forming nuclei in a polymer melt for initiation and propagation of crystal growth are not encompassed within the definition of nucleating agents according to the present invention.

Advantageously, nucleating agents of the invention increase the number of sites where crystals are able to start to grow, which in tum reduces the overall size of crystals in the material. If the size of a crystal is reduced below the wavelength of light, the material becomes more transparent. In that embodiment, the nucleating agent is sometimes referred to as a "clarifying agent." A further advantage of the use of nucleating agents to increase the number of nucleation sites in the thermoplastic phase of a TPE is a decrease in the time needed for a solid crystal structure to be obtained in the TPE, which allows the material to be processed at a higher temperature and facilitates faster processing speeds.

The nucleating agent may be inorganic or organic. According to the invention, the nucleating agent includes nucleating talcs, sodium benzoate, acrylic acid-grafted polypropylene, organic phosphate ester salts, sorbitol derivatives (e.g., benzylidene sorbitol), or combinations thereof.

Non-limiting examples of commercially available nucleating agents include those marketed under the trade designation, "Millad," by Milliken Chemicals (Spartanburg, SC). For example, Millad™ grades 3903, 3905, 3988, 3940, 3899, and 3908 are sorbitol derivatives sold by Milliken Chemicals and suitable for use as the nucleating agent in the present invention. Another suitable nucleating agent is Hyperform™ HPN-68 from Milliken Chemicals, which is specifically marketed as a new class of hyper nucleating agent that is stated to provide the fastest known crystallization rate in polypropylene while enhancing the modulus of the article produced. Certain nucleating agents that function as clarifiers are produced by Roquette (France) and sold in the U.S. by Ciba Specialty Chemicals under the trade designation, IrgaClear™ (e.g., DM-LO). Similarly, Mitsui Toatsu Chemicals in Japan produces a clarifier that is sold in the U.S. by Mitsui Chemicals using the trade designation NC-4.

Other commercially available nucleating agents include polyacrylic acid-grafted polypropylene marketed under the trade designation, "Polybond," by Crompton Corporation - Uniroyal Chemical (Middlebury, CT). For example, Polybond™ 1001 is an acrylic acid-grafted polypropylene sold by Crompton Corporation that is suitable for use as the nucleating agent in the present invention. Still further commercially available nucleating agents include those organic phosphate ester salts marketed by Amfine Chemical Corporation (Allendale, NJ), such as those using the following trade designations - "ADKstab No-11" and "ADKstab NA-21."

Other nucleating agents and clarifiers known to work in thermoplastic polymers are also suitable nucleating agents for this invention. For example, other suitable clarifiers and nucleating agents are summarized at the following website - www.plasticstechnology.com/articles/200207fa1.html.

### Other Optional Additives

Additives, or further additives as compared to those in the base TPE, can optionally be included in the TPE compositions of the invention, if desired. The type and amount of additives so used will depend on the presence and amount of additives in the base TPE, which in large part depends on the source of that TPE. The type and amount of additives used will also depend on the desired application for which the end user will prepare articles from the TPE composition.

In any event, any suitable additive may be included in desired amounts in TPE compositions of the invention. For example, processing oils, compatibilizers, fillers (e.g., calcined clay, kaolin clay, nanoclay, talc, silicates, and carbonates), pigments and colorants (e.g., carbon black), flame retardants, antioxidants, conductive particles, UV-inhibitors, stabilizers, coupling agents (e.g., silanes and titanates), plasticizers, lubricants, antiblocking agents, antistatic agents, waxes, foaming agents, and combinations thereof may be beneficially used in certain applications. Those of ordinary skill in the art will readily understand selection and use of such additives.

For instance, the use of processing oils to effect oil extension of the elastomer is well known in the art. In the production of TPEs, for example, it is often desirable to include an oil to extend the elastomer portion of the composition. This oil extension provides the property of lower hardness, while reducing cost of the elastomer to achieve the same TPE volume.

Oil can be a separate ingredient in the TPE composition or can be a part of the base elastomer itself, depending on the source of TPE. Non-limiting examples of oils suitable for optional use in the present invention include aromatic, paraffinic, and napthathenic mineral oils. Both fully saturated oils as well as partially unsaturated oils are usable depending upon the particular end-use application and the type of elastomer selected for the formulation of the TPE. The concentration of oil in the TPE composition will generally range from about 0 to about 200 phr, and preferably from about 0 to about 100 phr, but may vary outside of these ranges as understood by those of ordinary skill in the art.

Further, the use of compatibilizers to promote integration of, for example, the discrete elastomer phase into the continuous thermoplastic phase (or vice versa) of a TPE is well known. In the production ofTPEs, for example, it is often desirable and advantageous to include a compatibilizer to promote synergistic integration of the two distinct components - the thermoplastic and elastomer - when attempting to provide certain improved performance properties as compared to those observed with either component alone.

### Preparation of Thermoplastic Elastomer (TPE) Compositions

### Selection of Components

As used throughout the application, the phrase "thermoplastic elastomer composition" is used to refer to those compositions that include at least one TPE and at least one nucleating agent. Optionally, the TPE composition may include other additives, such as those noted above.

The nucleating agent is used in an amount that promotes the rate of crystal growth propagation and crystal size desired. Preferably, the nucleating agent promotes production efficiency and provides other benefits as well. For example, when transparency of the TPE composition is important, minimizing the resulting crystal sizes is particularly beneficial.

While not meant to limit the scope of the invention, the amount of nucleating agent is preferably about 0.01% to about 5.0% by weight, more preferably about 0.1 % to about 1.0% by weight, based on total weight of the base TPE. Of course, that amount can vary depending on the nature of the TPE and the proportion of thermoplastic and elastomer phases therein. When described in terms of the amount of thermoplastic present in the base TPE, the nucleating agent comprises 0.005% to 5% by weight, more preferably 0.1% to 1.0% by weight, based on total weight of the thermoplastic phase in the TPE.

### Selection of Processing Equipment and Processing of the TPE Composition

As noted above, the introduction of the nucleating agent into the TPE compositions of the present invention is not complicated and can utilize any one of several methods: (1) addition as a post-processing step after the TPE itself is formed but before the TPE is transferred to another melt-processor (e.g., the end user who will transform the TPE composition into a desired article), or (2) addition during final processing of the TPE into a part or article. The second method is generally not preferred, not only because the end user typically desires to maximum their process efficiency, but also due to the possibility of the nucleating agent not being sufficiently dispersed within the TPE, resulting in non-uniform and unpredictable results.

The first method for preparing a TPE composition incorporates at least one nucleating agent into at least one base TPE that has already been formed. According to this method, at least one base TPE is provided. At least one nucleating agent is then combined with the TPE. These components are then mixed, optionally in the presence of one or more optional additives. While not necessary, the components can also be heated in a further embodiment so that the thermoplastic phase of the TPE melts. In this further embodiment, the nucleating agent is able to substantially disperse within at least one thermoplastic phase of the TPE.

For either of these methods, processing of the TPE composition can occur via batch or continuous processing. Using either batch or continuous processing, components of the TPE composition can be mixed and heated to disperse the nucleating agent in the thermoplastic phase of the TPE in either a single piece of equipment or in multiple pieces of equipment. Economies of scale for production lead to a preference for continuous processing. Further economies of scale can be obtained when further steps are continuously performed. For example, a particularly efficient process is one whereby the TPE compositions can be formed into desired shapes and sizes continuously with their preparation.

In one embodiment of a batch process, TPE compositions can be prepared by mixing the components in a first piece of equipment. Mechanical mixers, such as Banbury-type, Brabender-type, roll mill, Buss, dry turbo mixers and the like are suitable for this purpose.

In one embodiment, all base components (i.e., TPE or components thereof, nucleating agent, and other optional additives, if used) of the TPE composition can be charged into the mixer. Mixing proceeds at any suitable pace to preferably effect a substantial mixing of the components. For example, mixing proceeds at a pace ranging from about 10 to about 100 rpm (revolutions per minute), and preferably from about 75 to about 85 rpm for a duration ranging from about 1 to about 5 minutes, and preferably from about 2 to about 4 minutes in certain embodiments of the invention.

If dispersion of the nucleating agent into the thermoplastic phase of the TPE is desired, heat can also be applied during this mixing step. When heat is applied, it is applied at a temperature sufficient to achieve the desired effects. Preferably, the components are heated to a temperature sufficient to melt or soften the thermoplastic component of the TPE. For example, when the thermoplastic phase of the TPE comprises a propylene-based polymer, the components are typically heated to a temperature ranging from about 170°C to about 210°C, and preferably from about 185°C to about 195°C. It is not necessary, however, for the nucleating agent to melt during this melt mixing step.

In a batch process, the TPE composition is then transferred to other equipment for formation into the desired shape and size. Typically, this will be a shape and size that enables an end user to melt process the TPE composition into the desired article. For example, plugs of the TPE composition can be removed from the mixer and compression molded into, for example, a 7.6 cm x 15.2 cm x 0.31 cm (3 in x 6 in x 0.125 in) plaque mold at a temperature ranging from about 170°C to about 230°C, and preferably from about 195°C to about 215°C. The plug material can be held under, for example, no pressure for 30 seconds, after which pressure can be increased to 1,100 kN force over a period of about 3 minutes. After application of pressure of 1,100 kN force for 4 minutes, the samples can be cooled to ambient temperature while pressure is maintained.

During continuous processing, the components can be first mixed in a suitable mixer. Mechanical mixers, such as Banbury-type, Brabender-type, roll mill, Buss, dry turbo mixers and the like are suitable for this purpose. Sufficient heat is generally generated in these mixers to melt mix the nucleating agent into the TPE composition. In this embodiment, the mixed components are then conveyed continuously to another piece of equipment, where the mixture is heated to form the TPE composition. Processing then continues by forming the TPE composition into the desired shape and size without the need to transfer the bulk contents to another piece of equipment during the continuous process. The TPE can even be formed into the end-use article, if desired, using continuous processing.

An example of a continuous process for forming the TPE composition comprises utilization of reactive extrusion equipment. A wide variety of reactive extrusion equipment can be employed in this manner. Preferred is a twin screw co-rotating extruder with a length-to-diameter (L/D) ratio ranging from about 38 to about 60, and preferably from about 40 to about 52.

Reactive extrusion allows for dynamic vulcanization of the elastomer phase of the TPE to occur, which is preferably when preparing thermoplastic vulcanizates (TPVs). Dynamic vulcanization, when used in conjunction with the present invention, can further advantageously reduce processing time and throughput. However, methods other than dynamic vulcanization can be utilized to prepare TPE compositions of the invention. For example, the elastomer component of the TPE can be cured in the absence of the thermoplastic component, powdered, and mixed with the thermoplastic component at a temperature above the melting or softening point of the thermoplastic component to form a TPE.

While optional, a TPE may be fully or partially crosslinked. As noted above, in certain embodiments of the invention, it is preferred that the TPE composition be a TPV. To achieve reaction, and hence crosslinking (also referred to as "curing") of a TPE so that it becomes a TPV, the mixture is typically heated to a temperature substantially equal to or greater than the softening or melting point of any thermoplastic component of the TPE and for a sufficient time to obtain a composition of the desired homogeneity and crosslinking of the elastomer phase. For example, the extrusion profile for a preferred polypropylene (PP)/EPDM reactive extrusion can be a flat 190°C profile and 500 rpm. The reaction components can be fed into the reaction extruder at 27 kg/hr (60 lbs/hr) using, for example, a 25-mm twin screw extruder.

The components of the TPE composition may be added to the processing equipment in any suitable amount and in any suitable order.

Those of ordinary skill in the art will readily recognize the ability to vary the amount and order of addition of the components within the TPE composition in general.

### Usefulness of the Invention

TPE compositions of the invention can be formed into a variety of articles as well understood by those of ordinary skill in the art. For example, TPE compositions can be reprocessed by being injection molded into final articles. When reprocessing TPE compositions of the invention, the composition is generally heated to a temperature of at least the softening or melting point of the thermoplastic component of the TPE composition in order to facilitate further forming into desired articles of various shapes and sizes. The end user of the TPE compositions will benefit by the processing advantages described throughout. Further, the present invention promotes the end user's ability to enhance transparency of certain articles formed from the TPE compositions.

Further embodiments of the invention are described in the following non-limiting example.

### Examples

### General Experimental Materials Examples

Unless noted otherwise, the following materials were used as indicated in the examples described below.

**Table 1**

| Trade Designation or Abbreviation | Description | Source |
|---|---|---|
| ADKstab NA-11 | Clarifier | Amfine Chemical Corporation; Allendale, NJ (www.amfine.com) |
| Forprene™ 6EK5 01 A65 | High-performance thermoplastic elastomer, natural, UV-stabilized | PolyOne Corporation; Avon Lake, OH (www.polyone.com) |
| Forprene™ 6M0 901 A70 | Thermoplastic elastomer | PolyOne Corporation; Avon Lake, OH (www.polyone.com) |
| Forprene™ 6M0 901 A75 | Thermoplastic elastomer | PolyOne Corporation; Avon Lake, OH (www.polyone.com) |
| Forprene™ 6M0 901 A85 | Thermoplastic elastomer | PolyOne Corporation; Avon Lake, OH (www.polyone.com) |
| Millad™ 3905 | Sorbitol derivative clarifier | Milliken Chemical; Spartanburg, SC |
| Hyperform™ HPN-68 | Norbornane carboxylic acid salt | Milliken Chemical; Spartanburg, SC |
| Millad™ 3908 | Sorbitol derivative clarifier | Milliken Chemical; Spartanburg, SC |
| Polybond™ 1001 | Acrylic acid-grafted polypropylene | Crompton Corporation -Uniroyal Chemical; Middlebury, CT (www.cromptoncorp.com) |
| Santoprene™ 101-73 | Thermoplastic elastomer | Advanced Elastomer Systems, L.P.; Akron, OH (www.santoprene.com) |
| Santoprene™ 101-87 | Thermoplastic elastomer | Advanced Elastomer Systems, L.P.; Akron, OH (www.santoprene.com) |
| Sodium Benzoate | Sodium Benzoate | Velsicol Chemical Corp. (Rosemont, IL) or other suppliers |

### Comparative Example C1 and Examples 1-3 (Reference Examples)

In a Brabender-type mixer, the Forprene™ 6EK5 01 A65 listed in Table 2 was mixed at a temperature of 190°C and a speed of 60 r.p.m. When the Forprene™ 6EK5 01 A65 began to flux as understood by those of skill in the art, the remaining materials listed in Table 2 were then added to the mixer. Mixing continued for 30 seconds. Then, the material was pressed into plaques using a compression molder operating at a temperature of 205°C (400°F).

**Table 2**

| Material | Parts by Weight (%) | | | |
|---|---|---|---|---|
| | Comparative Example C1 | Ex. 1 | Ex. 2 | Ex. 3 |
| Forprene™ 6EK5 01 A65 | 100.00 | 99.90 | 99.90 | 99.90 |
| Sodium Benzoate | - | 0.10 | - | - |
| Millad™ 3908 | - | - | 0.10 | - |
| ADKstab NA-11 | - | - | - | 0.10 |

The composition without a nucleating agent (Comparative Example C1) had a second melt crystallization temperature of 109°C, which was considerably lower than those of compositions of the invention. Compositions of the invention (Example 1-3) displayed second melt crystallization temperatures of 121 °C, 123°C, and 124°C, respectively. Thus, processing efficiency is improved when using compositions of the present invention, as a solid crystal structure is imparted more rapidly therein upon cooling.

### Comparative Example C2 and Examples 4-9 (Reference Examples)

In a Brabender-type mixer, the Forprene™ 6M0 901 A75 listed in Table 3 was mixed at a temperature of 190°C and a speed of 60 r.p.m. When the Forprene™ 6M0 901 A75 began to flux as understood by those of skill in the art, the remaining materials listed in Table 3 were then added to the mixer. Mixing continued for 30 seconds. Then, the material was pressed into plaques using a compression molder operating at a temperature of 205°C (400°F).

**Table 3**

| Material | Parts by Weight (%) | | | | | | |
|---|---|---|---|---|---|---|---|
| | Comparative Example C2 | Ex. 4 | Ex. 5 | Ex. 6 | Ex. 7 | Ex. 8 | Ex. 9 |
| Forprene™ 6M0 901 A75 | 100.00 | 99.75 | 99.75 | 99.75 | 99.75 | 99.90 | 99.65 |
| Sodium Benzoate | - | 0.25 | - | - | - | - | 0.10 |
| Millad™ 3908 | - | - | 0.25 | - | - | - | 0.10 |
| ADKstab NA-11 | - | - | - | 0.25 | - | - | - |
| Polybond™ 1001 | - | - | - | - | 0.25 | 0.10 | 0.15 |

As with the previous examples, the second melt crystallization temperatures for the compositions containing a nucleating agent (Examples 4-9) were higher than that composition without a nucleating agent (Comparative Example C2), which is consistent with the compositions of the present invention providing for improved processing efficiency.

### Examples 10-11 and Comparative Examples C3-C5

Two commercially available TPVs were modified according to the present invention for use in two different applications. A part was formed for each application, the type and thickness of which is reported in Table 4 below. Also noted in Table 4 is the commercially available TPV that was so modified according to each of Examples 10-11.

The modified TPV (i.e., that containing a nucleating agent) formed was relatively fast molding (denominated herein as a "Fast Molding Grade") as compared to unmodified commercially available TPVs having a similar hardness value. Those unmodified commercially available TPVs and their cycle times are noted in Table 5 below.

The fast molding grades of Example 10 and 11 were prepared using a combination of 0.1% sodium benzoate, 0.1% ADKstab NA-11, 0.2% nucleating talc, and 0.15% Hyperform™ HPN-68 as a nucleating agent, all weights of which were based on total weight of the base TPV.

**Table 4**

| Example No. | Application/Relevant Dimension | TPV Modified to Produce Fast Molding Grade | Cycle Time of Fast Molding Grade (sec) |
|---|---|---|---|
| 10 | Strain Relief Part (Wall Thickness = 0.3175 cm (0.125 in)) | Forprene™ 6M0 901 A75 | 24 |
| 11 | Grip (Wall Thickness = 0.9525 cm (0.375 in)) | Forprene™ 6M0 901 A85 | 71 |

**Table 5**

| Comparative Example No. | Application/Relevant Dimension | Unmodified TPV Grade | Cycle Time of Unmodified TPV Grade (sec) | % Reduction in Cycle Time |
|---|---|---|---|---|
| C3 | Strain Relief Part (Wall Thickness = 0.3175 cm (0.125 in)) | Santoprene™ 101-73 | 31 | 22.6 (Ex. 10) |
| C4 | Strain Relief Part (Wall Thickness = 0.3175 cm (0.125 in)) | Forprene™ 6M0 901 A70 | 31 | 22.6 (Ex. 10) |
| C5 | Grip (Wall Thickness = 0.9525 cm (0.375 in)) | Santoprene™ 101-87 | 91 | 22.0 (Ex. 11) |

As can be seen when comparing Tables 4 and 5, in all cases, the new Fast Molding Grade of the present invention enabled lower cycle times when used in an injection molding production line as compared to the cycle time when a comparable, unmodified commercially available TPV of a similar hardness value was similarly used (i.e., comparing the Fast Molding Grade of Example 10 to Comparative Examples C3 and C4 and comparing the Fast Molding Grade of Example 11 to Comparative Example C5). Thus, advantageously, the use of the fast molding grades resulted in higher productivity as compared to a comparable commercially available TPV with a similar hardness value. The overall percentage decrease in cycle time is reported in Table 5 for each comparison.

## Claims

1. A method of reducing production cycle times for injection-molded articles made from a thermoplastic elastomer composition, comprising the steps of:
adding a nucleating agent to a thermoplastic phase of a thermoplastic elastomer having at least one thermoplastic phase and at least one elastomeric phase, wherein the thermoplastic phase comprises a continuous phase and the elastomer phase comprises a discontinuous phase dispersed in the continuous thermoplastic elastomer phase, wherein the nucleating agent comprises sodium benzoate, a sorbitol derivative, an organic phosphate ester salt, an acrylic acid-grafted polypropylene, a nucleating talc or combinations thereof, to form the thermoplastic elastomer composition;
injection molding the thermoplastic elastomer composition into the article; and
permitting the thermoplastic elastomer composition in the article to cool,
wherein the thermoplastic elastomer before the adding step comprises at least one thermoplastic elastomer having at least one elastomeric phase and at least one thermoplastic phase, wherein the at least one thermoplastic phase consists of at least one propylene-based polymer and the at least one elastomer phase comprises a styrenic copolymer rubber phase or an at least partially crosslinked ethylene-propylene-diene rubber phase; and
wherein the composition comprises 0.005% to 5% by weight nucleating agents based on total weight of the thermoplastic phase in the thermoplastic elastomer.

2. The method of claim 1, wherein the thermoplastic elastomer comprises at least two chemically distinct thermoplastic phases.

3. The method of claim 1, wherein the thermoplastic elastomer comprises at least one thermoplastic phase of polypropylene; and wherein the thermoplastic elastomer comprises styrene-butadiene (SB) rubber, styrene-ethylene-butadiene-styrene (SEBS) rubber, styrene-ethylene-propylene-styrene (SEPS) rubber, styrene-isoprene-styrene (SIS) rubber, styrene-ethylene-ethylene-propylene-styrene (SEEPS) rubber, styrene propylene-styrene (SPS) rubber, hydrogenated versions of the foregoing, or combinations thereof.

## Patentansprüche

1. Verfahren zur Verringerung von Produktioriszykluszeiten für Spritzgussteile die aus einer thermoplastisches Elastomer umfassenden Zusammensetzung hergestellt sind, umfassend die Schritte:
Zugeben eines Keimbildners zu einer thermoplastischen Phase eines thermoplastischen Elastomers mit mindestens einer thermoplastischen Phase und mindestens einer elastomere Phase, wobei die thermoplastische Phase eine kontinuierliche Phase umfasst und die elastomere Phase eine diskontinuierliche Phase umfasst, die in der kontinuierlichen thermoplastischen Elastomerphase dispergiert ist, wobei der Keimbildner Natriumbenzoat, ein Sorbitolderivat, ein organisches Phosphatestersalz, ein Acrylsäure-gepfropftes Polypropylen, einen keimbildenden Talk oder Kombinationen davon umfasst, um die thermoplastisches Elastomer umfassende Zusammensetzung zu bilden,
Spritzgießen der thermoplastisches Elastomer umfassenden Zusammensetzung zu dem Teil und
Ermöglichen, dass die thermoplastisches Elastomer umfassende Zusammensetzung in dem Teil abkühlt,
wobei das thermoplastische Elastomer vor dem Zugabeschritt mindestens ein thermoplastisches Elastomer mit mindestens einer elastomeren Phase und mindestens einer thermoplastischen Phase umfasst, wobei die mindestens eine thermoplastische Phase aus mindestens einem auf Propylen basierenden Polymer besteht und die mindestens eine elastomere Phase eine Styrolcopolymergummiphase oder eine zumindest teilweise vernetzte Ethylenpropylendiengummiphase umfasst und
wobei die Zusammensetzung basierend auf dem Gesamtgewicht der thermoplastischen Phase in dem thermoplastischen Elastomer 0,005 Gew.-% bis 5 Gew.-% an Keimbildnern umfasst.

2. Verfahren nach Anspruch 1, wobei das thermoplastische Elastomer mindestens zwei chemisch unterschiedliche thermoplastische Phasen umfasst.

3. Verfahren nach Anspruch 1, wobei das thermoplastische Elastomer mindestens eine thermoplastische Phase aus Polypropylen umfasst und wobei das thermoplastische Elastomer Styrol-Butadien-Gummi (SB-Gummi), Styrol-Ethylen-Butadien-Styrol-Gummi (SEBS-Gummi), Styrol-Ethylen-Propylene-Styrol-Gummi (SEPS-Gummi), Styrol-Isopren-Styrol-Gummi (SIS-Gummi), Styrol-Ethylen-Ethylen-Propylen-Styrol-Gummi (SEEPS-Gummi), Styrol-Propylen-Styrol-Gummi (SPS-Gummi), hydrierte Versionen der vorherigen oder Kombinationen davon umfasst.

## Revendications

1. Procédé de réduction des temps de cycle de production pour des articles moulés par injection réalisés à partir d'une composition d'élastomère thermoplastique, comprenant les étapes consistant à :
ajouter un agent de nucléation à une phase thermoplastique d'un élastomère thermoplastique ayant au moins une phase thermoplastique et au moins une phase élastomère, dans lequel la phase thermoplastique comprend une phase continue et la phase élastomère comprend une phase discontinue, dispersée dans la phase élastomère thermoplastique continue, dans lequel l'agent de nucléation comprend du benzoate de sodium, un dérivé de sorbitol, un sel d'ester de phosphate organique, un polypropylène greffé d'acide acrylique, un talc de nucléation ou des combinaisons correspondantes, pour former la composition élastomère thermoplastique ;
mouler par injection la composition élastomère thermoplastique dans l'article ; et
laisser refroidir la composition élastomère thermoplastique dans l'article ;
dans lequel l'élastomère thermoplastique, avant l'étape d'addition, comprend au moins un élastomère thermoplastique ayant au moins une phase élastomère et au moins une phase thermoplastique, dans lequel ladite au moins une phase thermoplastique consiste en au moins un polymère à base de propylène et ladite phase élastomère comprend une phase de caoutchouc de copolymère styrénique ou une phase de caoutchouc d'éthylène-propylène-diène partiellement réticulé ; et
dans lequel la composition comprend 0,005 % à 5 % en poids d'agents de nucléation, sur la base du poids total de la phase thermoplastique dans l'élastomère thermoplastique.

2. Procédé selon la revendication 1, dans lequel l'élastomère thermoplastique comprend au moins deux phases thermoplastiques chimiquement distinctes.

3. Procédé selon la revendication 1, dans lequel l'élastomère thermoplastique comprend au moins une phase thermoplastique de polypropylène ; et dans lequel l'élastomère thermoplastique comprend du caoutchouc de styrène-butadiène (SB), du caoutchouc de styrène-éthylène-butadiène-styrène (SEBS), du caoutchouc de styrène-éthylène-propylène-styrène (SEPS), du caoutchouc de styrène-isoprène-styrène (SIS), du caoutchouc de styrène-éthylène-éthylène-propylène-styrène (SEEPS), du caoutchouc de styrène-propylène-styrène (SPS), des versions hydrogénées des précédentes, ou des combinaisons correspondantes.
